# EUROPÄISCHE PATENTSCHRIFT

(11) **EP 1 185 783 B1**
(45) Veröffentlichungstag und Bekanntmachung des Hinweises auf die Patenterteilung: **02.01.2004**
(21) Anmeldenummer: 00927195.8
(22) Anmeldetag: 11.05.2000
(51) Int. Cl.: F02M 1/16

(54) **KRAFTSTOFFVERSORGUNGSANLAGE**
FUEL SUPPLY INSTALLATION
INSTALLATION D'ALIMENTATION EN CARBURANT

(30) Priorität: 15.06.1999 DE 19927176
(43) Veröffentlichungstag der Anmeldung: 13.03.2002
(60) Teilanmeldung: 03008322.4
(73) Patentinhaber: DaimlerChrysler AG, 70567 Stuttgart (DE)
(72) Erfinder: HOLDER, Eberhard, D-72127 Kusterdingen (DE); KEMMLER, Roland, D-70619 Stuttgart (DE); MATT, Martin, D-76646 Bruchsal (DE); PFEFFER, Viktor, D-73760 Ostfildern (DE); PLOG, Carsten, D-88677 Markdorf (DE); STENGEL, Thomas, D-88045 Friedrichshafen (DE)
(86) Internationale Anmeldenummer: PCT/EP2000/004268
(87) Internationale Veröffentlichungsnummer: WO 2000/077383

(56) Entgegenhaltungen:
- EP-A- 0 060 976
- DE-C- 19 734 493
- GB-A- 2 330 176
- US-A- 3 807 377
- US-A- 4 876 989

## Beschreibung

Die Erfindung betrifft eine Kraftstoffversorgungsanlage für eine Brennkraftmaschine mit den Merkmalen des Oberbegriffs des Anspruchs 1.

Die derzeit zum Betrieb von Brennkraftmaschinen, z.B. für Kraftfahrzeuge wie Lastkraftwagen, Personenkraftwagen, Busse, verfügbaren Kraftstoffe stellen einen Kompromiss dar zwischen einerseits Einschränkungen seitens der Kraftstoffhersteller, z.B. aufgrund unterschiedlicher Rohölqualitäten, Herstellungsverfahren, Kosten und Energieaufwand und andererseits teilweise konträren Anforderungen seitens der Brennkraftmaschinen, wie z.B. sicherer Kaltstart auch bei extrem niedrigen Temperaturen, niedrige Abgas- und Verdunstungsemissionen, geringer Verbrauch, hohe Klopffestigkeit auch bei aufgeladenen Motoren, Verhinderung von Ablagerungen, Vermeidung von Korrosion, geringer Schwefelgehalt, ruhiger Motorlauf und hohe Sicherheit. Um die vorhandenen Kraftstoffe besser an die Anforderungen der Brennkraftmaschine anpassen zu können, werden Kraftstoffversorgungsanlage der eingangs genannten Art verwendet.

Beispielsweise ist aus der GB 2 209 796 A eine Kraftstofffraktioniereinrichtung bekannt, die mit einem Kraftstofftank verbunden ist und aus dem Kraftstoff Fraktionen mit unterschiedlicher Qualität separiert. Diese Kraftstofffraktionen werden in separaten Kraftstofftanks bevorratet, die über separate Kraftstoffleitungen an eine Brennkraftmaschine angeschlossen sind. Der eine Kraftstofftank wird über die Abgase der Brennkraftmaschine mittels einer Heizleitung beheizt. In den Kraftstoffleitungen sind Ventile angeordnet, die in Abhängigkeit des Betriebszustands der Brennkraftmaschine und/oder in Abhängigkeit des Füllstands der Kraftstofftanks die Kraftstoffqualität des der Brennkraftmaschine zugeführten Kraftstoffs regeln. Zur Regelung eines Kraftstoffeinspritzsystems, der Qualität des zugeführten Kraftstoffs und des Zündzeitpunkts kann ein Mikroprozessor vorgesehen sein.

Aus der DE 197 34 493 C1 ist eine Kraftstoffversorgungsanlage bekannt, die einen Kraftstofftank für flüssigen Kraftstoff aufweist. Außerdem ist eine Kraftstofffraktioniereinrichtung vorgesehen, die eingangsseitig den Kraftstoff vom Kraftstofftank erhält und daraus eine niedrig siedende Kraftstofffraktion und eine höher siedende Kraftstofffraktion erzeugt. Die Kraftstoffversorgungsanlage weist für jede Kraftstofffraktion einen separaten Speicher auf, die die zugehörige flüssige Kraftstofffraktion von der Kraftstofffraktioniereinrichtung erhält, darin bevorratet und der Brennkraftmaschine zur Verfügung stellt. Des weiteren verfügt die Kraftstoffversorgungsanlage über eine Hauptkraftstoffpumpe, die saugseitig über ein Umschaltventil entweder mit dem den Kraftstoff enthaltenden Kraftstofftank oder mit dem die höher siedende Kraftstofffraktion enthaltenden Speicher verbunden ist und druckseitig an einem ersten Eingang eines Wechselventils angeschlossen ist. Am zweiten Eingang dieses Wechselventils ist die Druckseite einer Zusatzkraftstoffpumpe angeschlossen, die saugseitig mit dem die niedrig siedende Kraftstofffraktion enthaltenden Speicher verbunden ist. Die Ausgangsseite des Wechselventils steht mit der Brennkraftmaschine in Verbindung. Um bei der bekannten Kraftstoffversorgungsanlage sowohl den Kraftstoff als auch die einzelnen Kraftstofffraktionen mit dem Einspritzdruck der Brennkraftmaschine zur Verfügung stellen zu können, werden hier zwei separate Kraftstoffpumpen verwendet. Ein derartiger Aufbau ist jedoch relativ aufwendig.

Die EP 0 060 976 A1 zeigt eine Kraftstoffversorgungsanlage für eine Brennkraftmaschine, bei der eine Kraftstoffpumpe aus einem Kraftstofftank Kraftstoff ansaugt und einerseits einem Einspritzventil und andererseits einem Konverter zuführt. Im Konverter wird eine niedrig siedende Kraftstofffraktion verdampft und einer Kühleinrichtung zugeführt, in der sie kondensiert. Die kondensierte Kraftstofffraktion wird dann einem Zusatztank zugeführt, der ebenfalls mit dem Einspritzventil verbunden ist. Zum Start der Brennkraftmaschine wird das Einspritzventil mit der Kraftstofffraktion aus dem Zusatztank versorgt; im Normalbetrieb mit dem unfraktionierten Kraftstoff aus dem Kraftstofftank. Da es sich hierbei um ein geschlossenes Leitungssystem handelt, herrscht auch im Zusatztank der Einspritzdruck.

Die GB 2 330 176 A zeigt eine Kraftstoffversorgungsanlage, bei der Kraftstoff aus einem Kraftstofftank mittels einer ersten Pumpe in eine Verdampfungseinheit befördert wird. In dieser Verdampfungseinheit wird eine niedrig siedende Kraftstofffraktion verdampft; die höher siedende, verbleibende Kraftstofffraktion wird im Normalbetrieb mittels einer zwèiten Pumpe einer Brennkraftmaschine zugeführt. Eine dritte Pumpe fördert die verdampfte, niedrig siedende Kraftstofffraktion einem als Druckspeicher ausgebildeten Kondensator zu, in dem diese kondensiert. Die niedrig siedende Kraftstofffraktion wird dabei in diesem Druckspeicher mit einem höheren Einspritzdruck beaufschlagt als die höher siedende Kraftstofffraktion. Zum Starten der Brennkraftmaschine wird diese mit der niedrig siedenden Kraftstofffraktion versorgt.

Die vorliegende Erfindung beschäftigt sich mit dem Problem, den Aufwand zu reduzieren, der erforderlich ist, um die Kraftstofffraktion und den Kraftstoff mit demselben Druck der Brennkraftmaschine zur Verfügung zu stellen.

Dieses Problem wird erfindungsgemäß durch eine Kraftstoffversorgungsanlage mit den Merkmalen des Anspruches 1 gelöst. Durch die Ausbildung des Speichers als Druckspeicher kann die darin enthaltene Kraftstofffraktion auf den Einspritzdruck aufgeladen werden. Auf diese Weise können weniger aufwendige Druckerzeugungsmittel zur Erzeugung des Einspritzdruckes verwendet werden. Insbesondere können dann Druckerzeugungsmittel verwendet werden, die bereits an der Brennkraftmaschine oder in deren Peripherie vorhanden sind. Erfindungsgemäß ist im Druckspeicher ein Balg angeordnet, der an eine Druckquelle, zweckmäßigerweise an die bereits vorhandene Kraftstoffpumpe, angeschlossen ist und von dieser mit dem Einspritzdruck beaufschlagbar ist. Da die Kraftstoffpumpe ohnehin den Einspritzdruck liefert, müssen bei einer derartigen Ausführungsform keine zusätzlichen Maßnahmen ergriffen werden.

Bei einer Alternativen weist die Kraftstofffraktioniereinrichtung eine Dampfpumpe auf, die saugseitig an einen Verdampfungsbereich und druckseitig an einen Kondensationsbereich angeschlossen ist. Bei einer derartigen Ausführungsform wird zweckmäßigerweise die vorhandene Dampfpumpe zur Erzeugung des Einspritzdruckes verwendet und in entsprechender Weise an den Druckspeicher angeschlossen. Dadurch ist sowohl die Kraftstofffraktion als auch der unfraktionierte Kraftstoff auf das Druckniveau des Einspritzdruckes für die Einspritzung in die Brennkraftmaschine anhebbar. Auch bei einer solchen Ausführungsform sind keine zusätzlichen, aufwendigen Maßnahmen erforderlich.

Gemäß einer besonders vorteilhaften Ausführungsform bildet eine Kondensationskammer der Kraftstofffraktioniereinrichtung den Speicher bzw. den Druckspeicher. Das bedeutet, daß diese Kondensationskammer nicht nur für einen Kondensationsdruck sondern für den Einspritzdruck dimensioniert ist. Durch die Ausbildung der Kondensationskammer als Speicher zur Bevorratung einer Kraftstofffraktion, der eine Dampfpumpe aufweist, die saugseitig an eine flüssigen Kraftstoff enthaltende Verdampfungskammer und dampfseitig an die Kondensationskammer, also den Speicher, angeschlossen ist, werden außerdem zusätzliche Leitungen zwischen der
Kondensationskammer und dem Speicher entfallen können und die damit zusammenhängenden Dichtungsprobleme vermieden. Vorteilhafterweise kann der Druck im Speicher bei einem Fraktionierbetrieb kleiner sein als der Einspritzdruck. Bei einer solchen Vorgehensweise kann die Dampfpumpe der Kraftstofffraktioniereinrichtung relativ klein dimensioniert werden. Außerdem benötigt der Fraktionierbetrieb dann weniger Energie.

Bei einer vorteilhaften Weiterbildung einer Kraftstoffversorgungsanlage der eingangs genannten Art kann eine Kondensationskammer der Kraftstofffraktioniereinrichtung zylindrisch, insbesondere kreiszylindrisch, ausgebildet sein, während eine Verdampfungskammer der Kraftstofffraktioniereinrichtung ringförmig ausgebildet ist und zentrisch koaxial zur Kondensationskammer angeordnet ist und diese ringförmig umschließt. Durch diesen Aufbau von Kondensationskammer und Verdampfungskammer ergibt sich ein besonders günstiger Wärmeaustausch zwischen den Kammern, so daß eine externe Wärmezufuhr zur Unterstützung der Verdampfung in der Verdampfungskammer entfallen kann. Ebenso kann auf eine entsprechende Kühlung der Kondensationskammer verzichtet werden.

Die Verdampfungskammer der Kraftstofffraktioniereinrichtung ist vor dem Fraktionierbetrieb mit flüssigem Kraftstoff befüllbar, wobei ein für den Fraktionierbetrieb ausreichender Dampfraum erhalten bleibt. Durch das Erzeugen von Unterdruck in der Verdampfungskammer (11) ist die Verdampfungskammer (11) mit flüssigem Kraftstoff befüllbar, wobei die Verdampfungskammer (11) mit dem Kraftstofftank (2) derart verbunden ist, daß der Kraftstoff aus dem Kraftstofftank (2) in die Verdampfungskammer (11) angesaugbar ist.
Bei einer solchen Vorgehensweise kann die ohnehin vorhandene Dampfpumpe gleichzeitig zum Befördern des flüssigen Kraftstoffs aus dem Kraftstofftank in die Verdampfungskammer verwendet werden.

Von besonderem Vorteil ist eine Ausführungsform, bei der die Verdampfungskammer durch die Befüllung mit Kraftstoff spülbar ist und zwar derart, daß der in der Verdampfungskammer enthaltene flüssige Kraftstoff gegen den aus dem Kraftstofftank zugeführten flüssigen Kraftstoff austauschbar ist. Durch diese Maßnahme wird "alter" Kraftstoff eines vorhergehenden Fraktionierbetriebs gegen "frischen" Kraftstoff aus dem Kraftstofftank ausgetauscht, so daß der frische Kraftstoff für den folgenden Fraktionierbetrieb einen möglichst hohen Anteil an der zu fraktionierenden Kraftstofffraktion besitzt.

Für eine Weiterbildung wird vorgeschlagen, die Kondensationskammer vor dem Fraktionierbetrieb entlüftbar ist. Mit Hilfe dieser Entlüftung wird Luft, die sich in der Kondensationskammer, also im Speicher, angesammelt hat, abgesaugt und durch gasförmige Kraftstofffraktion ersetzt. Die Effektivität des Fraktionierbetriebs wird dadurch gesteigert.

Bei einer Alternativen kann die Vorrichtung so ausgestaltet sein, daß die Kondensationskammer, im weiteren als Speicher bezeichnet, in einem Boden einen ersten Anschluß enthält, durch den aus dem Speicher von unten Flüssigkeit entnehmbar ist. Es ist ferner eine Steuerung vorgesehen, die vor der Versorgung der Brennkraftmaschine mit der Kraftstofffraktion während einer vorbestimmten Entnahmezeit oder für eine vorbestimmte Flüssigkeitsmenge am Boden des Speichers Flüssigkeit entnimmt. Durch diese vorgehensweise kann gewährleistet werden, daß Kondenswasser, das sich im Speicher bilden kann und sich am Boden des Speichers ansammelt, vor dem Einspritzbetrieb aus dem Speicher entnommen werden kann, um auf diese Weise zu verhindern, daß Kondenswasser oder dergleichen der Brennkraftmaschine zugeführt wird.

Zur Verbesserung des Fraktionierbetriebs kann bei einer weiteren Alternativen zur Erzeugung der Kraftstofffraktion ein gasförmiges Fluid unter Ausbildung von Bläschen in den flüssigen Kraftstoff eingeleitet werden. Diese Maßnahme verbessert den Wirkungsgrad des Fraktionierbetriebs.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine schaltplanartige Prinzipdarstellung einer Kraftstoffversorgungsanlage nach der Erfindung in einer ersten Ausführungsform,
- Fig. 2: ein Darstellungsbeispiel einer Kraftstoffversorgungsanlage wie in Fig. 1, die jedoch nicht unter den Schutzumfang fällt,
- Fig. 3: eine Prinzipdarstellung einer Kraftstofffraktioniereinrichtung mit Siedeverstärkungsmitteln, wie sie bei der erfindungsgemäßen Kraftstoffversorgungsanlage verwendet werden, und
- Fig. 4: eine Ansicht wie in Fig. 1, jedoch mit Schutzgehäuse.

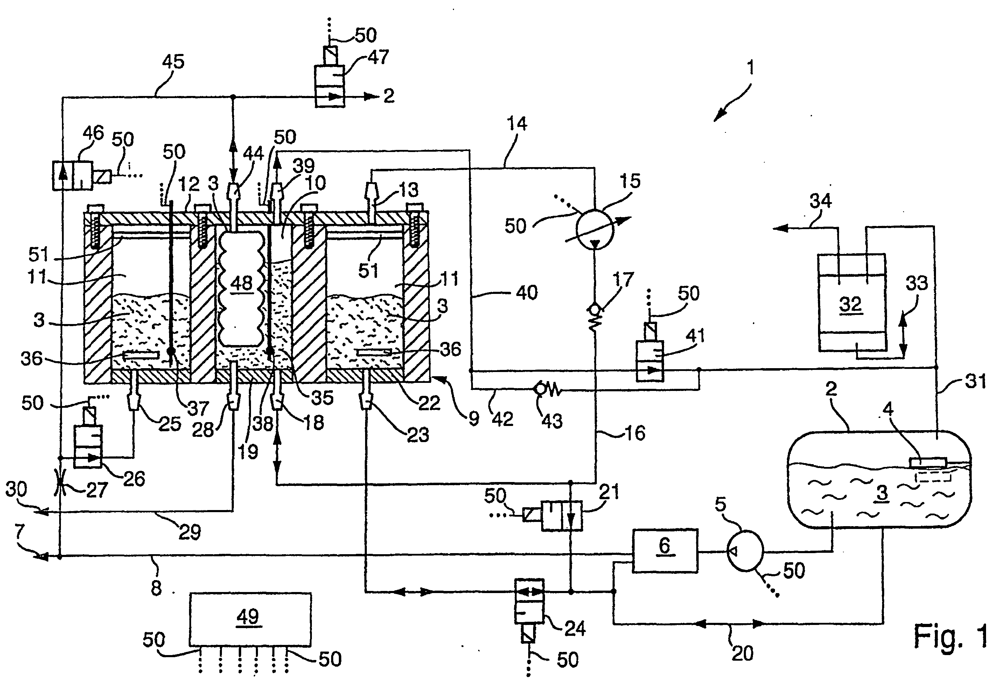

Entsprechend Fig. 1 weist eine erfindungsgemäße Kraftstoffversorgungsanlage 1 einen Kraftstofftank 2 auf, in dem sich ein flüssiger Kraftstoff 3, z.B. Diesel oder Benzin, befindet. Im Kraftstofftank 2 ist ein Schwimmer 4 vorgesehen, mit dem der Füllstand des Tanks 2 überwacht wird.

Für den Kraftstofftank 2 ist eine Entlüftung vorgesehen, wozu eine Entlüftungsleitung 31 oberhalb des Kraftstoffspiegels in den Tank 2 einmündet und über ein Aktivkohlefilter 32 bei 33 mit der Umgebung kommuniziert. Zur Regeneration des Aktivkohlefilters 32 kann zumindest kurzfristig eine Luftansaugung für die Brennkraftmaschine durch das Aktivkohlefilter 32 erfolgen; eine entsprechende Luftansaugeleitung ist mit 34 bezeichnet.

Eine Kraftstoffpumpe 5 ist saugseitig mit dem Tank 2 verbunden und saugt den Kraftstoff 3 an. An ihrer Druckseite fördert die Kraftstoffpumpe 5 den Kraftstoff 3 durch ein Filter 6 und stellt den Kraftstoff 3 bei 7 über eine Kraftstoffleitung 8 einer nicht dargestellten Brennkraftmaschine zur Verfügung.

Ein Anteil des von der Kraftstoffpumpe 5 der Brennkraftmaschine zugeführten Kraftstoffes 3, der von der Brennkraftmaschine nicht benötigt wird, kann stromab des Filters 6 durch eine Rückführungsleitung 20 wieder in den Tank 2 zurückgelangen.

Die Kraftstoffversorgungsanlage 1 weist außerdem eine Kraftstofffraktioniereinrichtung 9 auf, die eine zylindrische Kondensationskammer 10 aufweist, die koaxial zentrisch zu einer diese ringförmig umgebenden Verdampfungskammer 11 angeordnet ist.

Im Unterschied zu herkömmlichen Kondensationskammern 10, die lediglich für relativ geringe Kondensationsdrücke ausgelegt sind, ist die erfindungsgemäße Kondensationskammer 10 für einen relativ hohen Einspritzdruck ausgelegt. Außerdem dient die Kondensationskammer 10 bei der Erfindung gleichzeitig als Speicher für die Kraftstofffraktion 35, so daß bei der vorliegenden Erfindung die Begriffe "Kondensationskammer", "Speicher", "Druckspeicher" austauschbar sind und jeweils mit dem Bezugszeichen 10 versehen sind.

Die Verdampfungskammer 11 und die Kondensationskammer 10 sind durch einen gemeinsamen Deckel 12 gasdicht verschlossen. Die Verdampfungskammer 11 weist im Deckel 12 einen Ansauganschluß 13 auf, der mit einer Leitung 14 an die Saugseite einer Dampfpumpe 15 angeschlossen ist. Diese ist mit ihrer Druckseite über eine Leitung 16, in der ein Rückschlagventil 17 angeordnet ist, an einen Anschluß 18 angeschlossen, der in einem Boden 19 der Kondensationskammer 10 ausgebildet ist. Die Leitung 16 kommuniziert über ein Ventil 21 mit der Rückführungsleitung 20.

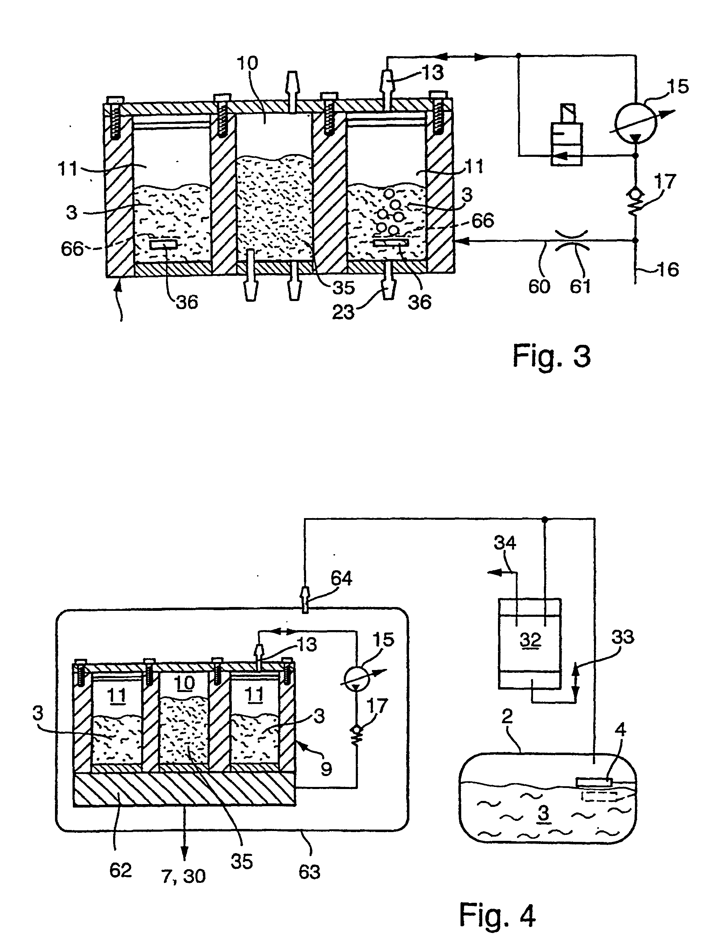

In der Verdampfungskammer 11 befindet sich ein Teil des im Tank 2 bevorrateten Kraftstoffes 3, während sich in der Kondensationskammer 10 eine von der Kraftstofffraktioniereinrichtung 9 erzeugte Kraftstofffraktion 35 befindet. In der Verdampfungskammer 11 ist außerdem ein vollständig in den flüssigen Kraftstoff 3 eingetauchtes Siedeverstärkungsmittel 36 angeordnet, welches weiter unten zu Fig. 3 näher beschrieben wird. Außerdem enthält die Verdampfungskammer 11 einen Füllstandssensor 37 zur Detektion des Kraftstoffüllstandes in der Verdampfungskammer 11. Ebenso enthält die Kondensationskammer 10 einen Füllstandssensor 38, der dementsprechend den Füllstand der Kraftstofffraktion 35 in der Kondensationskammer 10 sensiert.

In einem Boden 22 der Verdampfungskammer 11 ist ein Anschluß 23 ausgebildet, der über ein Ventil 24 mit der Rückführungsleitung 20 verbunden ist. Außerdem ist im Boden 22 der Verdampfungskammer 11 ein weiterer Anschluß 25 ausgebildet, der über ein Ventil 26 und über eine Drossel 27 mit der Kraftstoffleitung 8 und so mit der Druckseite der Kraftstoffpumpe 5 verbunden ist.

Im Boden 19 der Kondensationskammer 10 ist ein Anschluß 28 ausgebildet, der vom Boden 19 abstehend in die Kondensationskammer 10 hineinragt. Der Anschluß 28 mündet dabei oberhalb einer bündig zum Boden 19 verlaufenden Mündung des Anschlusses 18. Der Anschluß 28 stellt über eine Kraftstoffleitung 29 bei 30 die Kraftstofffraktion 35 der Brennkraftmaschine zur Verfügung. Es ist klar, daß sowohl 7 als auch 30 mit entsprechenden Ventilmitteln kommunizieren, die es ermöglichen, die Brennkraftmaschine mit dem Kraftstoff 3 und/oder mit der Kraftstofffraktion 35 zu versorgen.

Die Kondensationskammer 10 weist einen im Deckel 12 ausgebildeten Anschluß 39 auf, der über eine Leitung 40, in der ein Ventil 41 angeordnet ist, mit der Entlüftungsleitung 31 verbunden ist. Die Leitung 40 enthält außerdem einen Bypaß 42, der das Ventil 41 umgeht und ein Rückschlagventil 43 enthält. Außerdem weist die Kondensationskammer 10 einen weiteren, ebenfalls im Deckel 12 ausgebildeten Anschluß 44 auf, der mit einer Leitung 45 einerseits über ein Ventil 46 mit der Kraftstoffleitung 8 und so mit der Druckseite der Kraftstoffpumpe 5 und andererseits über ein Ventil 47 mit dem Kraftstofftank 2 kommuniziert. Im Inneren der Kondensationskammer 10 mündet der Anschluß 44 in einem Balg 48, der sich in der Kondensationskammer 10 ausdehnen kann.

Des weiteren ist eine Steuerung 49 vorgesehen, die über Signal- und/oder Steuerleitungen 50 mit den einzelnen Bestandteilen der Kraftstoffversorgungsanlage 1, wie z.B. Kraftstoffpumpe, Ventile und Sensoren, verbunden ist und zur Betätigung der einzelnen Komponenten der Kraftstoffversorgungsanlage 1 dient. Die Leitungen 50 sind in den Figuren lediglich angedeutet, um die Übersichtlichkeit zu wahren.

Die in Fig. 1 dargestellte Anordnung arbeitet wie folgt:

Die wiedergegebenen Kraftstoffversorgungsanlage 1 eignet sich besonders gut zur Fraktionierung einer niedrig siedenden Kraftstofffraktion 35, die vorteilhaft zum Starten bzw. zum Warmlaufen der Brennkraftmaschine verwendet werden kann. Beim Betätigen eines Anlassers der Brennkraftmaschine wird gleichzeitig die Kraftstoffpumpe 5 eingeschaltet und das Ventil 46 geöffnet. Da während des Startvorganges bei 7 kein Kraftstoff abfließen kann, füllt sich der Balg 48 mit dem Kraftstoff 3 und dehnt sich solange aus, bis sich im Kondensationsraum 10 ein Druckgleichgewicht ausgebildet hat oder bis der Balg 48 an einem mechanischen Anschlag zur Anlage kommt. Ein derartiger Anschlag kann beispielsweise durch den in die Kondensationskammer 10 hineinragenden Anschluß 28 gebildet werden, der dann mit dem Boden des Balgs 48 zusammenwirkt. Sobald sich das Druckgleichgewicht zwischen Balg 48 und Kondensationskammer 10 eingestellt hat, herrscht folglich in der Kraftstofffraktion 35 der von der Kraftstoffpumpe 5 erzeugte Druck, nämlich der Einspritzdruck. Auf diese Weise kann eine zusätzliche Kraftstoffpumpe, die die Kraftstofffraktion 35 auf den Einspritzdruck bringt, entfallen.

Bei einer bevorzugten Ausführungsform sind der Balg 48 und der damit zusammenwirkende mechanische Anschlag, insbesondere also der Anschluß 28, als elektrischer Kontakt ausgebildet. Im Normalfall wird der Füllstand im Speicher 10 mit dem kontinuierlich messenden Füllstandssensor 38 kontrolliert, so daß bei ausreichendem Füllstand der Balg 48 nicht mit seinem Anschlag in Kontakt kommt. Sollte jedoch der Balg 48 mit seinem Anschlag in Kontakt kommen, so daß die elektrische Verbindung geschlossen wird, deutet dies auf einen Funktionsfehler hin; z.B. ist zu wenig Kraftstoff 3 im Kraftstofftank 2 enthalten oder der Kraftstoff 3 enthält zu wenig Anteile der davon abzutrennenden Kraftstofffraktion 35.

Nachdem in der Kraftstofffraktion 35 der Einspritzdruck aufgebaut ist, öffnet kurzzeitig das Ventil 21, so daß vom Boden 19 des Speichers 10 her Flüssigkeit aus dem Speicher 10 in die Rückführungsleitung 20 und somit in den Kraftstofftank 2 zurückgeführt werden kann. Auf diese Weise ist es möglich, sich gegebenenfalls am Boden 19 des Speichers 10 ansammelndes Kondenswasser aus dem Speicher 10 herauszubefördern. So wird vermieden, daß Kondenswasser durch den Anschluß 28 der Brennkraftmaschine zugeführt werden kann.

Erst nach der Kondenswasserabsaugung werden bei 30 die entsprechenden Ventilmittel geöffnet, um die Brennkraftmaschine mit der Kraftstofffraktion 35 zum Starten zu versorgen.

Sobald der Start bzw. die Warmlaufphase der Brennkraftmaschine abgeschlossen ist, wird das Ventil 46 geschlossen und das Ventil 47 geöffnet, so daß der im Balg 48 enthaltene Kraftstoff 3 in den Tank 2 zurückfließen kann. Gleichzeitig fällt im Speicher 10 der Druck bis zum thermodynamischen Gleichgewicht, um auf diese Weise die zur Fraktionierung erforderliche Pumpleistung niedrig zu halten.

Nach der Entspannung des Balgs 48 wird für eine vorbestimmte Zeitdauer die Dampfpumpe 15 eingeschaltet und gleichzeitig das Ventil 41 geöffnet. Auf diese Weise kann in der Verdampfungskammer 11 ein Unterdruck erzeugt werden.

Nach der Erzeugung dieses Unterdrucks in der Verdampfungskammer 11 wird die Dampfpumpe 15 wieder abgeschaltet und das Ventil 41 geschlossen. Dafür wird nun das Ventil 24 geöffnet. Auf diese Weise bewirkt der in der Verdampfungskammer 11 ausgebildete Unterdruck ein Ansaugen von Kraftstoff 3 aus dem Kraftstofftank 2 über die Rückführungsleitung 20 in die Verdampfungskammer 11, bis sich auch hier wieder ein Druckausgleich einstellt. Auf diese Weise kann gewährleistet werden, daß für eine danach ablaufende Fraktionierung ausreichend Dampfraum erhalten bleibt. Der Füllstandssensor 37 kontrolliert dabei den aktuellen Füllstand in der Verdampfungskammer 11.

Beim Befüllen der Verdampfungskammer 11 mit Kraftstoff 3 kann es vor einer Fraktionierung zweckmäßig sein, einen Spülvorgang durchzuführen, um einen ausreichend hohen Anteil an niedrig siedenden Komponenten in dem in der Verdampfungskammer 11 enthaltenen Kraftstoff 3 zu gewährleisten. Zu diesem Zweck wird das Ventil 26 zusätzlich geöffnet, so daß Kraftstoff 3 aus der Kraftstoffleitung 8 von der Druckseite der Kraftstoffpumpe 5 über die Drossel 27, das Ventil 26 und den Anschluß 25 in die Verdampfungskammer 11 eintritt, während gleichzeitig an anderer Stelle Kraftstoff 3 durch den Anschluß 23, das Ventil 24 und die Rückführungsleitung 20 in den Tank 2 zurückgeführt wird. Auf diese Weise kann gewährleistet werden, daß der in der Verdampfungskammer 11 enthaltene Kraftstoff 3 einen möglichst hohen Anteil der durch die Fraktionierung abzutrennenden Kraftstofffraktion 35 enthält. Die Drossel 27 sorgt dabei dafür, daß während dieses Spülvorganges die Kraftstoffzuführung zur Brennkraftmaschine nicht beeinträchtigt wird. Zum Abschluß des Spülvorganges werden die Ventile 24 und 26 geschlossen.

Nach dem Spülen wird erneut die Dampfpumpe 15 eingeschaltet und das Ventil 41 für eine kurze Zeit geöffnet. Während dieser Zeit saugt die Dampfpumpe 15 die verdampfenden niedrig siedenden Kraftstoffanteile aus der Verdampfungskammer 11 ab und fördert diese in die Kondensationskammer 10. Durch das geöffnete Ventil 41 wird die noch im Kondensationsraum 10 enthaltene Luft in die Entlüftungsleitung 31 des Krafstofftanks 2 gefördert. Nach dieser Entlüftung des Kondensationsraumes 10 wird das Ventil 41 geschlossen und bei laufender Dampfpumpe 15 steigt allmählich der Druck in der Kondensationskammer 10 an, bis sich darin ein thermodynamisches Gleichgewicht einstellt und der Kraftstoffdampf kondensiert. Das Kondensat der so generierten Kraftstofffraktion 35 sammelt sich in der Kondensationskammer 10, wobei diese gleichzeitig als Speicher dient. Der im Speicher 10 gesammelte Vorrat an Kraftstofffraktion 35 reicht üblicherweise für mehrere Kaltstarts bzw. Warmlaufvorgänge aus. Dabei mißt der Füllstandssensor 38 kontinuierlich die Füllstandshöhe. Sobald eine obere Füllstandsmarke erreicht ist, wird die Dampfpumpe 15 abgeschaltet. Das System ist bereit für den nächsten Startvorgang.

Wie aus dieser Funktionsbeschreibung hervorgeht, kann die Fraktionierung bzw. das Auffüllen des Speichers 10 auch dann durchgeführt werden, wenn die Brennkraftmaschine nicht in Betrieb ist, sofern ausreichend Antriebsenergie für die Kraftstoffpumpe 5 und die Dampfpumpe 15 vorhanden ist.

Unterschreitet die Füllstandsänderung pro Zeiteinheit während des Fraktioniervorganges einen bestimmten Grenzwert, so erkennt die Steuerung 49 daraus einen Hinweis auf einen zu geringen Anteil an niedrig siedenden Kraftstoffkomponenten in dem in der Verdampfungskammer 11 enthaltenen Kraftstoff 3. Um diesen Anteil der erwünschten Kraftstofffraktion 35 wieder zu erhöhen, wird die Fraktionierung zunächst beendet bzw. unterbrochen und der Vorrat an Kraftstoff 3 in der Verdampfungskammer 11 aufgefüllt und gegebenenfalls ein Spülvorgang durchgeführt. Danach wird die Fraktionierung wieder gestartet bzw. fortgesetzt. Überschreitet die Zahl dieser Wiederholungen einen vorgegebenen Grenzwert, so entnimmt die Steuerung 49 daraus, daß ein Systemfehler vorliegt.

Wird die vorgenannte Füllstandmarke im Speicher 10 zu irgendeinem Zeitpunkt überschritten, erkennt die Steuerung 49 daraus das Vorliegen eines Systemfehlers. Beispielsweise kann die Füllstandsmarke bei einem Bruch des Balgs 48 überschritten werden.

Da der Speicher 10 bzw. die Kondensationskammer 10 von der Verdampfungskammer 11 umgeben ist, kommt es während der Fraktionierung zwischen der sich dabei abkühlenden Verdampfungskammer 11 und der sich dabei aufwärmenden Kondensationskammer 10 zu einem Wärmeaustausch. Durch diese Anordnung ist es möglich, auf eine zusätzlich Wärmezufuhr für die Verdampfung der Kraftstofffraktion 35 grundsätzlich zu verzichten. Daher ist es insbesondere möglich, die Fraktionierung auch bei abgeschalteter Brennkraftmaschine durchzuführen.

Das in der Leitung 16 angeordnete Rückschlagventil 17 verhindert, daß insbesondere bei abgeschalteter Dampfpumpe 15 ein Teil der Kraftstofffraktion 35 aus dem Speicher 10 in die Verdampfungskammer 11 zurückfließt.

Das im Bypaß 42 angeordnete Rückschlagventil 43 dient als Sicherheitsventil und verhindert einen unzulässig hohen Druckanstieg im Speicher 10.

In der Verdampfungskammer 11 ist vor dem Anschluß 13 ein Filter 51 angeordnet, das verhindern soll, daß flüssiger Kraftstoff 3 aus der Verdampfungskammer 11 in die Kondensationskammer 10 gefördert wird.
Mit Hilfe der weiter unten zu Fig. 3 beschriebenen Siedeverstärkugsmittel 36 wird die Verdampfung der niedrig siedenden Kraftstoffanteile vereinfacht und die Antriebsleistung für die Dampfpumpe 15 reduziert.

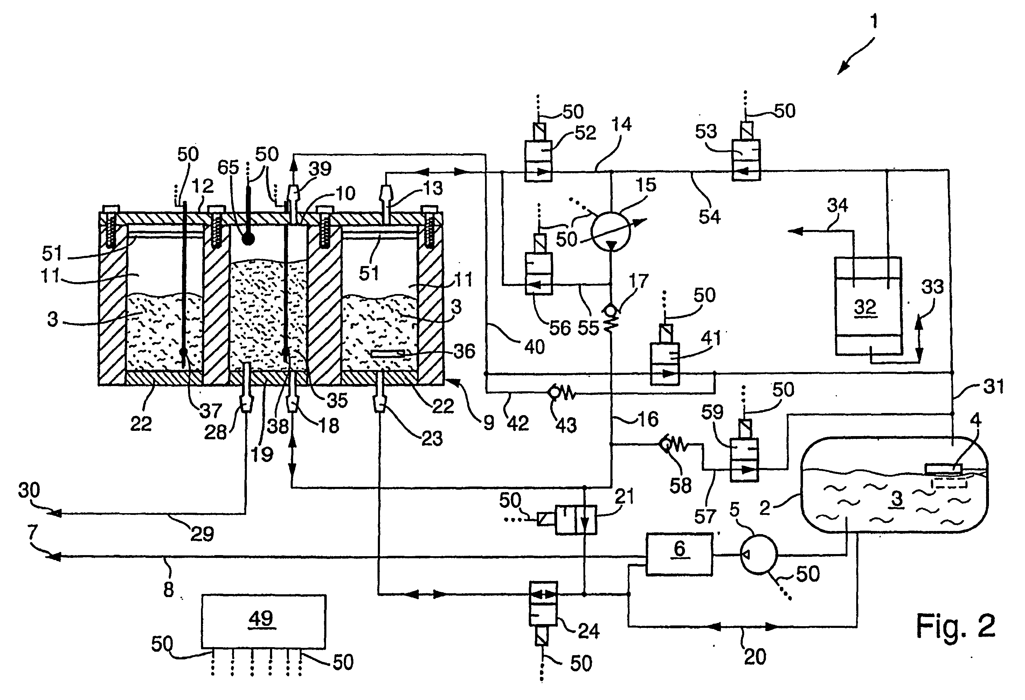

Fig. 2 zeigt eine alternative Kraftstoffversorgungsanlage 1, die nicht unter den Schutzumfang fällt, und weitgehend gleich aufgebaut ist, wie die in Fig. 1 dargestellte, wobei gleiche Bauteile gleiche Bezugszeichen haben.

Entsprechend Fig. 2 kann die Saugseite der Dampfpumpe 15 bei dieser Anlage einerseits über ein Ventil 52 und die Leitung 14 mit dem Anschluß 13 der Verdampfungskammer 11 und andererseits über ein Ventil 53 und eine Leitung 54 mit der Entlüftungsleitung 31 des Kraftstofftanks 2 verbunden werden. Außerdem ist eine Bypaßleitung 55 vorgesehen, in der ein Ventil 56 angeordnet ist, wobei mit der Bypaßleitung 55 bei geöffnetem Ventil 56 das Ventil 52 und die Dampfpumpe 5 umgangen werden können. Außerdem ist eine zusätzliche Verbindungsleitung 57 zwischen der Leitung 16 und der Entlüftungsleitung 31 des Tanks 2 vorgesehen, in der ein Rückschlagventil 58 sowie ein Ventil 59 enthalten sind.

Der in der Kondensationskammer 10 bzw. im Speicher 10 herrschende Druck kann hier mittels eines Drucksensors 65 überwacht werden.

Die Anlage gemäß Fig. 2 arbeitet wie folgt:

Beim Betätigen des Anlassers der Brennkraftmaschine wird gleichzeitig die Dampfpumpe 15 eingeschaltet; außerdem werden die Ventile 59,52,56 und 53 geöffnet. Die Dampfpumpe 15 kann dadurch drucklos anlaufen. Nach einer kurzen Anlaufphase schließen dann die Ventile 52 und 56, so daß die Dampfpumpe 15 aus der Entlüftungsleitung 31 und somit aus dem Tank 2 dampfförmigen Kraftstoff 3 und durch das Aktivkohlefilter 32 Luft aus der Umgebung 33 ansaugt und in die Kondensationskammer 10 einleitet. Das Rückschlagventil 58 dient dabei als Überdruckventil auf der Druckseite der Dampfpumpe 15 und ist so eingestellt, daß sich in der Kondensationskammer 10, d.h. im Speicher 10 der Einspritzdruck aufbaut.

Um Kondenswasser, das sich eventuell am Boden 19 des Speichers 10 angesammelt hat, aus dem Speicher 10 zu entfernen, wird das Ventil 21 kurzzeitig geöffnet, so daß am Boden 19 des Speichers 10 durch den Anschluß 18 Flüssigkeit, insbesondere Kondenswasser, aus dem Speicher 10 abgesaugt und in den Tank 2 transportiert wird. Nach dieser Kondenswasserabsaugung werden bei 30 entsprechende Ventilmittel geöffnet, und die dort der Brennkraftmaschine zur Verfügung gestellte Kraftstofffraktion 35 kann für den Start und zum Warmlaufen der Brennkraftmaschine zugeführt werden.

Ist der Start bzw. der Warmlauf der Brennkraftmaschine beendet, werden die Ventile 59 und 53 geschlossen, während die Ventile 52 und 41 geöffnet werden; die Dampfpumpe 15 läuft unterdessen weiter. Dadurch saugt die Dampfpumpe 15 die bei dem in der Verdampfungskammer 11 gebildeten Unterdruck verdampfenden niedrig siedenden Kraftstoffanteile, die der Kraftstoff 3 enthält, aus der Verdampfungskammer 11 ab. Die niedrig siedenden Kraftstoffanteile werden von der Dampfpumpe 15 in die Kondensationskammer 10 gefördert. Gleichzeitig wird dabei durch das geöffnete Ventil 41 noch in der Kondensationskammer 10 vorhandene Luft zusammen mit dem Kraftstoffdampf in die Entlüftungsleitung 31 des Kraftstofftanks 2 gefördert.

Sobald das Ventil 41 geschlossen wird, steigt in der Kondensationskammer 10 der Druck bis zum Erreichen des thermodynamischen Gleichgewichtes an, so daß dann der Kraftstoffdampf kondensiert. Das Kondensat bzw. die Kraftstofffraktion 35 sammelt sich in der Kondensationskammer 10, die hier gleichzeitig als Speicher 10 ausgebildet ist. Der Füllstandssensor 38 kontrolliert dabei kontinuierlich die Füllstandshöhe.

Sobald eine obere Füllstandsmarke im Speicher 10 erreicht ist, werden die Ventile 56,53 und 24 geöffnet, wobei die Dampfpumpe 15 weiterläuft. Bei diesem Schaltzustand erfolgt eine Rückführung in den Kraftstofftank 2 des in der Verdampfungskammer 11 bevorrateten Kraftstoffes 3, in welchem sich durch den Entzug der niedrig siedenden Komponenten die höher siedenden Komponenten angereichert haben.

Sobald die Verdampfungskammer 11 vollständig entleert ist, werden die Ventile 56 und 53 geschlossen und die Ventile 52 und 59 geöffnet, wobei die Dampfpumpe 15 weiterläuft und das Ventil 24 weiterhin geöffnet bleibt. Durch diese Schaltstellung wird die Verdampfungskammer 11 wieder mit Kraftstoff 3 aus dem Kraftstofftank 2 befüllt.

Sobald die vom Füllstandssensor 37 überwachte obere Füllstandsmarke für die Verdampfungskammer 11 erreicht ist, wird die Dampfpumpe 15 abgeschaltet und die Ventile 52,59 und 24 geschlossen.

Wenn die Füllstandsänderung pro Zeiteinheit im Speicher 10 während der Fraktionierung einen bestimmten Grenzwert unterschreitet, so ist dies für die Steuerung 49 ein Hinweis darauf, daß in dem in der Verdampfungskammer 11 bevorrateten Kraftstoff 3 der Anteil an niedrig siedenden Kraftstoffkomponeten zu gering ist. Die Steuerung 49 führt dann die Entleerung und Neubefüllung der Verdampfungskammer 11 durch, um so den Kraftstoff 3 in der Verdampfungskammer 11 durch "frischen" Kraftstoff aus dem Kraftstofftank 2 zu ersetzen. Überschreitet die Anzahl von derartigen Austauschvorgängen einen vorgegebenen Grenzwert, erkennt die Steuerung 49 einen Systemfehler.

Anhand von Fig. 3 soll die Funktionsweise der Siedeverstärkungsmittel 36 erläutert werden. Entsprechend der linken Hälfte von Fig. 3 kann ein derartiges Siedeverstärkungsmittel bei einer ersten Variante durch einen Körper 36 gebildet sein, der eine Oberflächenstruktur aufweist, die eine große, vom Kraftstoff 3 benetzbare Oberfläche besitzt. Ein derartig aufgebauter Körper 36 wirkt dabei wie eine Art Katalysator und erleichtert das Verdampfen der niedrig siedenden Kraftstoffteile an der Oberfläche des Körpers 36. Ein derartiges Siedeverstärkungsmittel arbeitet rein passiv und ohne Fremdenergie.

Entsprechend der rechten Hälfte von Fig. 3 ist in die Verdampfungskammer 11 das Siedeverstärkungsmittel 36 entsprechend einer Variante aufgebaut. Dieses Siedeverstärkungsmittel besteht aus einem Körper 36, der aus einem gasdurchlässigen Material, vorzugsweise aus einem offenporigen oder mikroporösen Material, besteht und der mit einem gasförmigen Fluid beaufschlagt wird. Zu diesem Zweck zweigt von der Leitung 16 auf der Druckseite der Dampfpumpe 15 eine Leitung 60 ab, die eine Drossel 61 enthält und den mikroporösen Körper 36 mit einem Teilstrom der gasförmigen, aus der Verdampfungskammer 11 abgesaugten Kraftstofffraktion 35 versorgt. Insbesondere wenn die abgesaugte Kraftstofffraktion auf der Druckseite der Dampfpumpe 15 durch den dort herrschenden hohen Druck verflüssigt wird, erfolgt durch die Drossel 61 eine erneute Verdampfung der Kraftstofffraktion. Die dabei an der Druckseite der Dampfpumpe 15 entnommene Menge ist relativ gering und wirkt sich auf die Förderleistung der Dampfpumpe 15 nur unwesentlich aus. Die im Kraftstoff 3 aufsteigenden Gasbläschen sind in besonderer Weise dazu geeignet, weitere niedrig siedende Kraftstoffanteile aus dem Kraftstoff 3 herauszulösen. Ein derartiges Siedeverstärkungsmittel arbeitet aktiv und benötigt Fremdenergie.

Zusätzlich oder alternativ können die Körper 36 mit Heizmitteln 66 ausgestattet sein. Beispielsweise können die Körper 36 mit einer Halbleiterwiderstandsheizung (PTC-Heizung) ausgestattet sein. Durch die Aufheizung des Kraftstoffs 3 wird die Siedeneigung der niedrig siedenden Kraftstoffkomponenten verstärkt.

Entsprechend Fig. 4 kann ein Großteil der Anschlüsse an die Verdampfungskammer 11 und an die Kondensationskammer 10 an der Unterseite der Kammern 10 und 11 in eine Ventilplatte 62 integriert sein, wodurch sich eine besonders kompakte Bauweise für die Kraftstofffraktioniereinrichtung 9 ergibt. Außerdem wird dadurch eine komplett montierbare Baugruppe ausgebildet.

In Fig. 4 wird außerdem eine weitere Verbesserung für eine solche Kraftstofffraktioniereinrichtung 9 dargestellt, da der größte Teil einer fluidführenden Bestandteile der Kraftstofffraktioniereinrichtung 9 innerhalb eines Schutzgehäuses 63 untergebracht ist, das hinsichtlich flüssiger und gasförmiger Kraftstoffe dicht ist. Über einen Anschluß 64 kann dabei eine Entlüftung dieses Schutzgehäuses 63 durch das Aktivkohlefilter 32 durchgeführt werden.

Zur Ausbildung einer besonders vorteilhaften Detailvariante wird vorgeschlagen, alle oder einen Großteil der fluidführenden Bestandteile der Kraftstofffraktioniereinrichtung 9 im Kraftstofftank 2 anzuordnen, wobei dann das Tankgehäuse das vorgenannte Schutzgehäuse 63 bildet.

## Patentansprüche

1. Kraftstoffversorgungsanlage für eine Brennkraftmaschine, mit einem Kraftstofftank (2) für flüssigen Kraftstoff (3), mit einer Kraftstoffpumpe (5), die aus dem Kraftstofftank (2) Kraftstoff (3) ansaugt, mit einem Einspritzdruck beaufschlagt und der Brennkraftmaschine zur Verfügung stellt, mit einer Kraftstofffraktioniereinrichtung (9), die aus dem Kraftstoff (3) mindestens eine flüssige Kraftstofffraktion (35) erzeugt, mit einem Speicher (10), der die flüssige Kraftstofffraktion (35) von der Kraftstofffraktioniereinrichtung (9) erhält, bevorratet und der Brennkraftmaschine zur Verfügung stellt, wobei die Kraftstoffversorgungsanlage (1) die zur Verfügung gestellte Kraftstofffraktion (35) und den zur Verfügung gestellten Kraftstoff (3) bedarfsabhängig der Brennkraftmaschine zuführt, wobei der Speicher als Druckspeicher (10) ausgebildet ist und wobei Druckerzeugungsmittel (5,48;15) vorgesehen sind, mit denen die Kraftstofffraktion (35) im Druckspeicher (10) mit dem Einspritzdruck beaufschlagbar ist,
**dadurch gekennzeichnet,**
**daß** die Druckerzeugungsmittel einen Balg (48) und eine Druckquelle (5) aufweisen, wobei der Balg (48) im Druckspeicher (10) angeordnet ist, an die Druckquelle (5) angeschlossen ist und von dieser mit dem Einspritzdruck beaufschlagbar ist.

2. Kraftstoffversorgungsanlage nach Anspruch 1,
**dadurch gekennzeichnet,**
**daß** die Druckquelle durch die Druckseite der Kraftstoffpumpe (5) gebildet ist, wobei Ventilmittel (46,47) die Beaufschlagung des Balgs (48) mit dem Einspritzdruck ermöglichen.

3. Kraftstoffversorgungsanlage nach Anspruch 1 oder 2,
**dadurch gekennzeichnet,**
**daß** die Kraftstofffraktioniereinrichtung (9) als Druckerzeugungsmittel eine Dampfpumpe (15) aufweist, die saugseitig an eine flüssigen Kraftstoff (3) enthaltende Verdampfungskammer (11) und druckseitig an eine Kondensationskammer (10) angeschlossen ist, wobei die Dampfpumpe (15) druckseitig an den Druckspeicher (10) angeschlossen ist und zur Erzeugung des Einspritzdruckes ausgebildet ist.

4. Kraftstoffversorgungsanlage nach Anspruch 3,
**dadurch gekennzeichnet,**
**daß** die Kondensationskammer den Speicher (10) bildet.

5. Kraftstoffversorgungsanlage nach Anspruch 3 oder 4,
**dadurch gekennzeichnet,**
**daß** die Kondensationskammer (10) zylindrisch, insbesondere kreiszylindrisch, ausgebildet ist und daß die Verdampfungskammer (11) ringförmig ausgebildet ist, wobei die Verdampfungskammer (11) zentrisch und koaxial zur Kondensationskammer (10) angeordnet ist und diese ringförmig umschließt.

6. Kraftstoffversorgungsanlage nach Anspruch 5,
**dadurch gekennzeichnet,**
**daß** Kondensationskammer (10) und Verdampfungskammer (11) eine komplett montierbare Baugruppe bilden, die mit einer Ventilplatte (62) ausgestattet ist, die Ventilmittel zum Betrieb der Kraftstofffraktioniereinrichtung (9) enthält.

7. Kraftstoffversorgungsanlage nach einem der Ansprüche 1 bis 6,
**dadurch gekennzeichnet,**
**daß** ein fluiddichtes Schutzgehäuse (63) vorgesehen ist, in dem fluidführende Bestandteile der Kraftstofffraktioniereinrichtung (9) untergebracht sind.

8. Kraftstoffversorgungsanlage nach einem der Ansprüche 1 bis 7,
**dadurch gekennzeichnet,**
**daß** die Kraftstofffraktioniereinrichtung (9) oder zumindest Bestandteile davon im Kraftstofftank (2) untergebracht sind.

9. Kraftstoffversorgungsanlage nach einem der Ansprüche 1 bis 8,
**dadurch gekennzeichnet,**
**daß** der Speicher (10) in einem Boden (19) einen ersten Anschluß (18) enthält, durch den aus dem Speicher (10) von unten Flüssigkeit entnehmbar ist, wobei eine Steuerung (49) vorgesehen ist, die vor der Versorgung der Brennkraftmaschine mit der Kraftstofffraktion (35) durch diesen Anschluß (18) eine Flüssigkeitsentnahme während einer vorbestimmten Entnahmezeit oder für eine vorbestimmte Flüssigkeitsmenge durchführt.

10. Kraftstoffversorgungsanlage nach Anspruch 9,
**dadurch gekennzeichnet,**
**daß** im Boden (19) des Speichers (10) ein zweiter Anschluß (28) vorgesehen ist, durch den aus dem Speicher (10) Flüssigkeit entnehmbar ist, wobei die Mündung des zweiten Anschlusses (28) höher liegt als die Mündung des ersten Anschlusses (18).

11. Kraftstoffversorgungsanlage nach einem der Ansprüche 3 bis 10,
**dadurch gekennzeichnet,**
**daß** in der Verdampfungskammer (11) Siedeverstärkungsmittel (36) angeordnet sind.

12. Kraftstoffversorgungsanlage nach Anspruch 11,
**dadurch gekennzeichnet,**
**daß** die Siedeverstärkungsmittel einen in den flüssigen Kraftstoff (3) eingetauchten Körper (36) aufweisen, der eine Oberflächenstruktur mit einer großen, vom Kraftstoff (3) benetzbaren Oberfläche aufweist.

13. Kraftstoffversorgungsanlage nach Anspruch 11 oder 12,
**dadurch gekennzeichnet,**
**daß** die Siedeverstärkungsmittel einen in den flüssigen Kraftstoff (3) eingetauchten Körper (36) aufweisen, der aus einem gasdurchlässigen Material, insbesondere aus einem offenporigen oder mikroporösen Material, besteht und der mit einem gasförmigen Fluid beaufschlagt wird, das unter Bläschenbildung in den flüssigen Kraftstoff (3) austritt.

14. Kraftstoffversorgungsanlage nach Anspruch 13,
**dadurch gekennzeichnet,**
**daß** das gasförmige Fluid durch gasförmigen Kraftstoff (3) oder durch gasförmige Kraftstofffraktion (35) gebildet ist.

15. Kraftstoffversorgungsanlage nach einem der Ansprüche 11 bis 14,
**dadurch gekennzeichnet,**
**daß** die Siedeverstärkungsmittel einen in den flüssigen Kraftstoff (3) eingetauchten Körper (36) aufweisen, der mit Heizmitteln, insbesondere mit einer Halbleiterwiderstandsheizung, ausgestattet ist.

16. Kraftstoffversorgungsanlage nach Anspruch 3,
**dadurch gekennzeichnet,**
**daß** der Druck im Speicher (10) bei einem Fraktionierbetrieb kleiner ist als der Einspritzdruck.

17. Kraftstoffversorgungsanlage nach einem der Ansprüche 3 bis 16,
**dadurch gekennzeichnet,**
**daß** die Verdampfungskammer (11) vor einem Fraktionierbetrieb mit flüssigem Kraftstoff (3) befüllbar ist, wobei ein für den Fraktionierbetrieb ausreichender Dampfraum erhalten bleibt.

18. Kraftstoffversorgungsanlage nach Anspruch 17,
**dadurch gekennzeichnet,**
**daß** durch das Erzeugen von Unterdruck in der Verdampfungskammer (11) die Verdampfungskammer (11) mit flüssigem Kraftstoff befüllbar ist, wobei die Verdampfungskammer (11) mit dem Kraftstofftank (2) derart verbunden ist, daß der Kraftstoff aus dem Kraftstofftank (2) in die Verdampfungskammer (11) angesaugbar ist.

19. Kraftstoffversorgungsanlage nach Anspruch 17 oder 18,
**dadurch gekennzeichnet,**
**daß** die Verdampfungskammer (11) durch die Befüllung mit Kraftstoff (3) spülbar ist, derart, daß der in der Verdampfungskammer (11) enthaltene flüssige Kraftstoff gegen den aus dem Kraftstofftank (2) zugeführten flüssigen Kraftstoff (3) austauschbar ist.

20. Kraftstoffversorgungsanlage nach Anspruch 3,
**dadurch gekennzeichnet,**
**daß** die Kondensationskammer (10) vor dem Fraktionierbetrieb entlüftbar ist.

## Claims

1. Fuel supply unit for an internal combustion engine, with a fuel tank (2) for liquid fuel (3), with a fuel pump (5) which draws fuel (3) from the fuel tank (2), pressurises it to an injection pressure and supplies it to the combustion engine, with a fuel fractionation device (9) which, from the fuel (3), produces at least one liquid fuel fraction (35), with a reservoir (10) which receives the liquid fuel fraction (35) from the fuel fractionation device (9), stores it and keeps it available for the combustion engine, such that the fuel supply unit (1) delivers the available fuel fraction (35) and the available fuel (3) to the combustion engine as a function of its demand, such that the reservoir is formed as a pressure reservoir (10) and such that pressurising means (5, 48; 15) are provided, with which the fuel fraction (35) can be pressurised in the pressure reservoir (10) up to the injection pressure,
**characterised in that**
the pressurising means comprise a bellows (48) and a pressure source (5), the bellows (48) being arranged in the pressure reservoir (10), being connected to the pressure source (5), and being able to be pressurised by the latter up to the injection pressure.

2. Fuel supply unit according to Claim 1,
**characterised in that**
the pressure source is formed by the compression side of the fuel pump (5), and valve means (46, 47) enable the bellows (48) to be acted on with the injection pressure.

3. Fuel supply unit according to Claims 1 or 2,
**characterised in that**
the fuel fractionation device (9), as a pressure production means, comprises a vapour pump (15) which is connected on its suction side to a vaporisation chamber (11) containing liquid fuel (3) and on its compression side to a condensation chamber (10), such that on its compression side the vapour pump (15) is connected to the pressure reservoir (10) and is designed to produce the injection pressure.

4. Fuel supply unit according to Claim 3,
**characterised in that**
the condensation chamber forms the reservoir (10).

5. Fuel supply unit according to Claims 3 or 4,
**characterised in that**
the condensation chamber (10) is formed as a cylinder, in particular a circular cylinder, and the vaporisation chamber (11) is of annular form, such that the vaporisation chamber (11) is arranged centrally and coaxially to the condensation chamber (10), surrounding it like a ring.

6. Fuel supply unit according to Claim 5,
**characterised in that**
the condensation chamber (10) and vaporisation chamber (11) form a complete, mountable structural group, which is equipped with a valve plate (62) containing valve means for the operation of the fuel fractionating device (9).

7. Fuel supply unit according to any of Claims 1 to 6,
**characterised in that**
a fluid-tight protective housing (63) is provided, in which fluid-carrying parts of the fuel fractionating device (9) are accommodated.

8. Fuel supply unit according to any of Claims 1 to 7,
**characterised in that**
the fuel fractionation device (9) or at least parts of it are accommodated in the fuel tank (2).

9. Fuel supply unit according to any of Claims 1 to 8,
**characterised in that**
the reservoir (10) has at the bottom (19) a first connection (18) through which liquid can be taken out of the reservoir (10) from underneath, a control unit (49) being provided which, before supplying the fuel fraction (35) to the combustion engine, draws liquid out through the said connection (18) for a predetermined time or up to a predetermined quantity of liquid.

10. Fuel supply unit according to Claim 9,
**characterised in that**
a second connection (28) is provided in the bottom (19) of the reservoir (10), through which liquid can be taken from the reservoir (10), the mouth of the second connection (28) being positioned higher than the mouth of the first connection (18).

11. Fuel supply unit according to any of Claims 3 to 10,
**characterised in that**
boiling promotion means (36) are arranged in the vaporisation chamber (11).

12. Fuel supply unit according to Claim 11,
**characterised in that**
the boiling promotion means consist of a body (36) immersed in the liquid fuel (3), which has a surface structure with a large area that can be wetted by the fuel (3).

13. Fuel supply unit according to Claims 11 or 12,
**characterised in that**
the boiling promotion means consist of a body (36) immersed in the liquid fuel (3), which consists of a gas-permeable material, in particular an open-pored or microporous material, and which is acted upon by a gaseous fluid which emerges into the liquid fuel (3) with the formation of bubbles.

14. Fuel supply unit according to Claim 13,
**characterised in that**
the gaseous fluid consists of gaseous fuel (3) or gaseous fuel fraction (35).

15. Fuel supply unit according to any of Claims 11 to 14,
**characterised in that**
the boiling promotion means consist of a body (36) immersed in the liquid fuel (3), which is equipped with heating means, in particular with a semiconductor resistance heater.

16. Fuel supply unit according to Claim 3,
**characterised in that**
the pressure in the reservoir (10) during a fractionating operation is lower than the injection pressure.

17. Fuel supply unit according to any of Claims 3 to 16,
**characterised in that**
before a fractionating operation the vaporisation chamber (11) can be filled with liquid fuel (3), leaving a vapour space sufficient for the fractionation operation.

18. Fuel supply unit according to Claim 18,
**characterised in that**
the vaporisation chamber (11) can be filled with liquid fuel by producing an underpressure in the vaporisation chamber (11), and the chamber (11) is connected to the fuel tank (2) in such manner that the fuel can be drawn out of the fuel tank (2) into the vaporisation chamber (11).

19. Fuel supply unit according to Claims 17 or 18,
**characterised in that**
the vaporisation chamber (11) can be flushed by filling with fuel (3), in such manner that the liquid fuel contained in the vaporisation chamber (11) can be replaced by the liquid fuel (3) drawn out of the fuel tank (2).

20. Fuel supply unit according to Claim 3,
**characterised in that**
before the fractionation operation the condensation chamber (10) can be vented.

## Revendications

1. Installation d'alimentation en carburant pour un moteur à combustion interne, comprenant un réservoir à carburant (2) pour un carburant liquide (3), comprenant une pompe à carburant (5) qui aspire le carburant (3) hors du réservoir à carburant (2), applique sur ledit carburant une pression d'injection et le met à disposition du moteur à combustion interne, comprenant une unité de fractionnement du carburant (9) qui produit à partir du carburant (3) au moins une fraction de carburant liquide (35), comprenant un réservoir de stockage (10), qui reçoit la fraction de carburant liquide (35) acheminée à partir de l'unité de fractionnement du carburant (9), stocke ladite fraction de carburant et la met à disposition du moteur à combustion interne, l'installation d'alimentation en carburant (1) acheminant vers le moteur à combustion interne, en fonction des besoins, la fraction de carburant (35) mise à disposition et le carburant (3) mis à disposition, le réservoir de stockage étant conçu sous forme de réservoir sous pression (10) et des moyens générant la pression (5, 48 ; 15) étant prévus, lesquels appliquent la pression d'injection sur la fraction de carburant (35) dans le réservoir sous pression (10), **caractérisée en ce que** les moyens générant la pression comprennent un soufflet (48) et une source de pression (5), le soufflet (48) étant agencé dans le réservoir sous pression (10), étant raccordé à la source de pression (5) et étant sollicité par celle-ci avec une pression d'injection.

2. Installation d'alimentation en carburant selon la revendication 1, **caractérisée en ce que** la source de pression est formée par le côté pression de la pompe à carburant (5), des vannes (46, 47) permettant de solliciter le soufflet (48) avec la pression d'injection.

3. Installation d'alimentation en carburant selon la revendication 1 ou 2, **caractérisée en ce que** l'unité de fractionnement du carburant (9) est munie d'une pompe à vapeur (15) formant un moyen générant la pression, dont le côté aspiration est raccordé à une chambre de vaporisation (11) contenant du carburant liquide (3) et dont le côté pression est raccordé à une chambre de condensation (10), la pompe à vapeur (15) étant raccordée du côté pression au réservoir sous pression (10) et étant conçue pour générer la pression d'injection.

4. Installation d'alimentation en carburant selon la revendication 3, **caractérisée en ce que** la chambre de condensation forme le réservoir de stockage (10).

5. Installation d'alimentation en carburant selon la revendication 3 ou 4, **caractérisée en ce que** la chambre de condensation (10) forme une chambre cylindrique, en particulier cylindrique circulaire, et **en ce que** la chambre de vaporisation (11) forme une chambre annulaire, la chambre de vaporisation (11) étant centrée et disposée coaxialement par rapport à la chambre de condensation (10) et entourant celle-ci de manière annulaire.

6. Installation d'alimentation en carburant selon la revendication 5, **caractérisée en ce que** la chambre de condensation (10) et la chambre de vaporisation (11) forment un groupe prêt à être monté, qui est équipé d'une plaque à vannes (62) qui contient des éléments de vanne destinés à actionner l'unité de fractionnement du carburant (9).

7. Installation d'alimentation en carburant selon l'une quelconque des revendications 1 à 6, **caractérisée en ce qu'**il est prévu un carter de protection (63) étanche aux fluides, dans lequel sont logés des éléments de guidage du fluide de l'unité de fractionnement du carburant (9).

8. Installation d'alimentation en carburant selon l'une quelconque des revendications 1 à 7, **caractérisée en ce que** l'unité de fractionnement du carburant (9) ou au moins des éléments de celle-ci sont logés dans le réservoir à carburant (2).

9. Installation d'alimentation en carburant selon l'une quelconque des revendications 1 à 8, **caractérisée en ce qu'**un fond (19) du réservoir de stockage (10) est muni d'un premier raccord (18), par lequel un liquide peut être prélevé par le bas hors du réservoir de stockage (10), une commande (49) étant prévue, laquelle, avant de fournir la fraction de carburant (35) au moteur à combustion interne, effectue via ledit raccord (18) un prélèvement de liquide pendant une durée de prélèvement prédéfinie ou pour une quantité de liquide prédéfinie.

10. Installation d'alimentation en carburant selon la revendication 9, **caractérisée en ce que** dans le fond (19) du réservoir de stockage (10) est prévu un deuxième raccord (28), qui permet de prélever un liquide hors du réservoir de stockage (10), l'embouchure du deuxième raccord (28) étant située plus haut que l'embouchure du premier raccord (18).

11. Installation d'alimentation en carburant selon l'une quelconque des revendications 3 à 10, **caractérisée en ce que** des moyens intensifiant l'ébullition (36) sont disposés dans la chambre de vaporisation (11).

12. Installation d'alimentation en carburant selon la revendication 11, **caractérisée en ce que** les moyens intensifiant l'ébullition sont formés par un corps (36) plongé dans le carburant liquide (3), lequel est muni d'une structure de surface avec une grande surface pouvant être mouillée par le carburant (3).

13. Installation d'alimentation en carburant selon la revendication 11 ou 12, **caractérisée en ce que** les moyens intensifiant l'ébullition sont formés par un corps (36) plongé dans le carburant liquide (3), lequel est réalisé dans un matériau perméable aux gaz, en particulier un matériau à pores ouverts ou microporeux, et lequel est sollicité par un fluide gazeux qui s'échappe du carburant (3) liquide en formant des petites bulles.

14. Installation d'alimentation en carburant selon la revendication 13, **caractérisée en ce que** le fluide gazeux est formé par le carburant (3) gazeux ou une fraction de carburant (35) gazeuse.

15. Installation d'alimentation en carburant selon l'une quelconque des revendications 11 à 14, **caractérisée en ce que** les moyens intensifiant l'ébullition sont formés par un corps (36) plongé dans le carburant liquide (3), lequel est équipé de moyens de chauffage, en particulier un chauffage ohmique à semi-conducteur.

16. Installation d'alimentation en carburant selon la revendication 3, **caractérisée en ce que** la pression dans le réservoir de stockage (10) est plus faible dans le processus de fractionnement que sous la forme de pression d'injection.

17. Installation d'alimentation en carburant selon l'une quelconque des revendications 3 à 16, **caractérisée en ce que** la chambre de vaporisation (11) peut être remplie avec un carburant (3) liquide avant un processus de fractionnement, un espace à vapeur suffisant restant maintenu pour le processus de fractionnement.

18. Installation d'alimentation en carburant selon la revendication 17, **caractérisée en ce que**, par la production d'une dépression dans la chambre de vaporisation (11), la chambre de vaporisation (11) peut être remplie avec un carburant liquide, la chambre de vaporisation (11) étant reliée au réservoir à carburant (2) de telle sorte que le carburant peut être aspiré hors du réservoir à carburant (2) vers la chambre de vaporisation (11).

19. Installation d'alimentation en carburant selon la revendication 17 ou 18, **caractérisée en ce que** la chambre de vaporisation (11) peut être rincée par le remplissage avec le carburant (3), de telle sorte que le carburant liquide contenu dans la chambre de vaporisation (11) peut être remplacé par le carburant (3) liquide acheminé hors du réservoir à carburant (2).

20. Installation d'alimentation en carburant selon la revendication 3, **caractérisée en ce que** la chambre de condensation (10) peut être ventilée avant le processus de fractionnement.
